# EUROPEAN PATENT APPLICATION

(11) **EP 4 332 296 A1**
(43) Date of publication of application: **06.03.2024**
(21) Application number: 22795791.7
(22) Date of filing: 26.04.2022
(51) Int. Cl.: D21F 7/08, C08G 18/00, D21F 3/02

(54) **BELT FOR PAPERMAKING AND METHOD FOR PRODUCING BELT FOR PAPERMAKING**

(30) Priority: 27.04.2021 JP 2021075446
(71) Applicant: Ichikawa Co., Ltd., Tokyo 113-8442 (JP)
(72) Inventor: TAKAMORI, Yuya, Tokyo 113-8442 (JP); SAKAI, Taichi, Tokyo 113-8442 (JP)
(74) Representative: Dr. Gassner & Partner mbB
(86) International application number: PCT/JP2022/018893
(87) International publication number: WO 2022/230878

(57) **Abstract**

[Problem]

Provided is a papermaking belt in which resin fallings from the resin layer during its use has been suppressed and a method for producing such a papermaking belt.

[Solution]

A papermaking belt according to an embodiment of the present invention is to be used in a papermaking machine and comprises at least one resin layer comprising a resin, wherein the total number of swellings whose height is equal to or higher than 50 µm and cracks whose length is equal to or longer than 10 mm on at least one surface of the resin layer is equal to or less than 1.0/m². A papermaking belt according to another embodiment of the present invention is to be used in a papermaking machine and comprises at least one resin layer comprising a resin, wherein the resin layer is formed using a resin composition comprising an aqueous dispersion of a urethane resin, and wherein the resin composition comprises an organic solvent whose boiling point at 1 atm is equal to or higher than 100 °C.

## Description

### [Technical Field]

The present invention relates to a papermaking belt and a method for producing a papermaking belt.

### [Background Art]

A papermaking machine for removing moisture from a source material of paper is generally equipped with a wire part, a press part, and a dryer part. These parts are placed in the order of the wire part, the press part, and the dryer part in a wet paper web transfer direction.

In each part of such a papermaking machine, various papermaking belts are used for the purpose of transferring and compressing a wet paper web, and the like. Such papermaking belts include such as, for example, a wet paper transfer belt (transfer belt) for transferring and delivering a wet paper web, and a shoe press belt used in a shoe press mechanism.

Regarding the delivery of a wet paper web using a wet paper transfer belt in the press part, as a papermaking machine, a closed-draw papermaking machine that delivers a wet paper web in the closed-draw manner is currently known. In a press part of the closed-draw papermaking machine, the wet paper web is transferred while being mounted on a papermaking felt or wet paper transfer belt. Thus, the wet paper web never run alone, preventing the generation of paper breaking. Therefore, the closed-draw papermaking machine exhibits an excellent high speed running suitability and operation stability.

On the other hand, in order to properly deriver the wet paper web in a closed-draw papermaking machine, the wet paper transfer belt is required to have a function to transfer a wet paper web being adhered on it (wet paper web adherence) and a function to smoothly detach the wet paper web when delivering it to the later stage (wet paper web detachability). Therefore, in order to realize such contradictory functions, the adherence of the wet paper web carrying surface of the wet paper transfer belt to the wet paper web is an important factor.

Patent document 1 and Patent document 2 disclose wet paper transfer belts in which a wet paper web contact surface of a resin layer that carries a wet paper web has an arithmetic surface roughness within a predetermined range in accordance with the basis weight of the base paper of the wet paper web and the swelling ratio of a resin that constitutes the resin layer to water.

### [Prior Art Documents]

### [Patent Documents]

[Patent Document 1] JP 2014-62337 A
[Patent Document 2] JP 2014-62338 A

### [Summary of Invention]

### [Technical Problem]

On the other hand, in a papermaking machine, a wet paper web is continuously transferred at a high speed, for example at a speed equal to or faster than 1,000 m/min. In such a severe environment, the resin constituting the papermaking belt will fall off due to friction or bending fatigue, etc., while the papermaking belt runs. If the resin of the papermaking belt falls in this way, the desired performance of the papermaking belt, for example, wet paper web adherence and detachability in a case of a wet paper transfer belt, would be altered, and it will become difficult to use the papermaking belt for a prolonged period.

In Patent Document 1 and Patent Document 2, the wet paper web adherence and detachability are controlled by adjusting the surface roughness of the rein layer as well as the swelling ratio of the resin to water. However, an increase in the swelling ratio of the resin to water decreases the strength of resin, which results in more fallings of the resin.

Accordingly, an object of the present invention is to provide a papermaking belt in which resin fallings from the resin layer during its use has been suppressed and a method for producing such a papermaking belt.

### [Solution to Problem]

The present inventors have made an intensive investigation in order to achieve the above-described object, and as a result, found that the resin falls starting from a crack or swelling of a certain size or larger on a surface of a papermaking belt, and that the resin fallings can be prevented if the number of the cracks and swellings on the surface of the papermaking belt per surface area is equal to or less than a predetermined value. Furthermore, the present inventors have found that the cracks and swellings on the surface of the papermaking belt can be suppressed by using a resin composition comprising an aqueous dispersion of a urethane resin and an organic solvent having a boiling point equal to or higher than a predetermined temperature at the time of forming a resin layer of the papermaking belt. The present inventors have further proceeded the investigation and as a result accomplished the present invention.

A gist of the present invention is as follows:
(1) A papermaking belt used in a papermaking machine comprising at least one resin layer comprising a resin, wherein
   the total number of swellings whose height is equal to or higher than 50 µm and cracks whose length is equal to or longer than 10 mm on at least one surface of the resin layer is equal to or less than 1.0/m².
(2) The papermaking belt according to (1), wherein the resin layer comprises an aqueous urethane resin.
(3) A papermaking belt used in a papermaking machine comprising at least one resin layer comprising a resin, wherein
   the resin layer is formed using a resin composition comprising an aqueous dispersion of a urethane resin, and wherein
   the resin composition comprises an organic solvent whose boiling point at 1 atm is equal to or higher than 100 °C.
(4) The papermaking belt according to (3), wherein the content of the organic solvent in the resin composition is equal to or more than 5.0 mass % and equal to or less than 30 mass %.
(5) The papermaking belt according to (3) or (4), wherein the organic solvent comprises an organic solvent whose boiling point at 1 atm is equal to or higher than 170 °C.
(6) The papermaking belt according to any one of (3) to (5), wherein the vapor pressure of the organic solvent at 20°C is equal to or less than 200 Pa.
(7) The papermaking belt according to any one of (3) to (6), wherein the organic solvent comprises one or more type(s) selected from a group consisting of 1-methyl-2-pyrrolidone, 1-ethyl-2-pyrrolidone, dipropyleneglycol dimethylether, 3-methoxy-*N*,*N-*dimethylpropanamide, and 3-butoxy-*N*,*N*-dimethylpropanamide.
(8) The papermaking belt according to any one of (3) to (6), wherein the organic solvent comprises an organic solvent whose boiling point at 1 atm is equal to or higher than 205 °C.
(9) The papermaking belt according to (8), wherein the organic solvent comprises one or more type(s) selected from a group consisting of 1-ethyl-2-pyrrolidone, 3-methoxy-*N,N-*dimethylpropanamide, and 3-butoxy-*N*,*N*-dimethylpropanamide.
(10) The papermaking belt according to any one of (1) to (9), wherein the papermaking belt is a wet paper transfer belt.
(11) The papermaking belt according to any one of (1) to (9), wherein the papermaking belt is a shoe press belt.
(12) A method for producing a papermaking belt comprising a step of forming at least one resin layer using a resin composition comprising an aqueous dispersion of a urethane resin, wherein
   the resin composition comprises an organic solvent whose boiling point at 1 atm is equal to or higher than 100 °C.

### [Advantageous Effects of Invention]

By the configuration above, it is possible to provide a papermaking belt in which resin fallings from the resin layer during its use has been suppressed and a method for producing such a papermaking belt.

### [Brief Description of Drawings]

FIG. 1 is a cross-sectional view in a cross machine direction showing a papermaking belt according to one embodiment of the present invention.
FIG. 2 is an enlarged photograph for illustrating swellings on a wet paper web carrying surface of a wet paper transfer belt.
FIG. 3 is a schematic cross-sectional diagram of a first resin layer for illustrating a method of measuring the height of a swelling generated on the wet paper web carrying surface of the wet paper transfer belt.
FIG. 4 is a schematic diagram for illustrating a preferred embodiment of a method of producing a papermaking belt according to the present invention.
FIG. 5 is a schematic diagram for illustrating a preferred embodiment of a method of producing a papermaking belt according to the present invention.
FIG. 6 is a schematic diagram for illustrating a preferred embodiment of a method of producing a papermaking belt according to the present invention.
FIG. 7 is a schematic diagram for illustrating a preferred embodiment of a method of producing a papermaking belt according to the present invention.
FIG. 8 is a schematic diagram for illustrating an example of a papermaking machine to which a papermaking belt according to the present invention is applied.
FIG. 9 is a summarized diagram of a bending fatigue testing apparatus used for carrying out a resin falling test.
FIG. 10 is a cross-sectional photograph of a swelling formed on the wet paper transfer belt according to Comparative Example 2.

### [Description of Embodiments]

Hereinbelow, referring to the appended drawings, preferred embodiments of a papermaking belt and a method for producing a papermaking belt according to the present invention will be described in detail.

### <1. Papermaking Belt>

First, a papermaking belt according to a preferred embodiment of the present invention will be described.

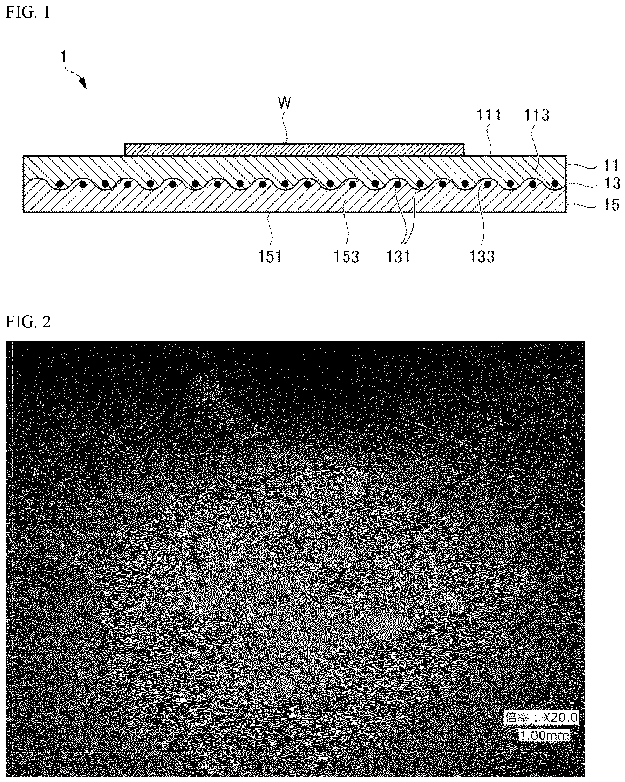

FIG. 1 is a cross-sectional view in a cross machine direction showing an example of a papermaking belt according to a preferred embodiment of the present invention. Note that, in the drawings, each member has been emphasized in size as appropriate for ease of illustration and thus does not indicate the actual proportion and size of each member. Herein, the aforementioned cross machine direction may be referred to as "CMD", and the machine direction may be referred to as "MD". Also note that, in the present embodiment, a wet paper transfer belt is to be described as an example of a papermaking belt, though the papermaking belt of the present invention is not to be limited thereto.

The wet paper transfer belt (papermaking belt) 1 shown in FIG. 1 is to be used for transferring and delivering a wet paper web W in a press part of a papermaking machine. The wet paper transfer belt 1 forms an endless band-shaped body. That is, the wet paper transfer belt 1 is an annular belt. Moreover, the wet paper transfer belt 1 is normally placed such that its circumferential direction runs along the machine direction (MD) of the papermaking system.

The wet paper transfer belt 1 comprises a reinforcing fibrous substrate layer 13, a first resin layer (a wet paper web carrying-side resin layer) 11 provided on one principal plane on the outer surface-side of the reinforcing fibrous substrate layer 13, and a second resin layer (a roll-side resin layer) 15 provided on the other principal plane on the inner surface-side of the reinforcing fibrous substrate layer 13, and these layers are laminated to form the wet paper transfer belt 1. Moreover, the first resin layer is a layer that forms the outer surface (outer circumferential surface) of an annulus that is formed by the wet paper transfer belt 1.

The first resin layer 11 is a layer which principally be constituted with a resin 113 provided on one principal plane of the reinforcing fibrous substrate layer 13.

The first resin layer 11 is in contact with the wet paper web on the principal plane that is opposite to the principal plane joined to the reinforcing fibrous substrate layer 1, and it also constitutes a wet paper web carrying surface 111 for carrying the wet paper web W. That is, the wet paper transfer belt 1 can carry the wet paper web W on the wet paper web carrying surface 111 of the first resin layer 11 and transfer the wet paper web W.

Here, in the present embodiment, in the wet paper web carrying surface 111 of the first resin layer 11, the total of the numbers of swellings whose height is equal to or higher than 50 µm and cracks whose length is equal to or longer than10 mm is equal to or less than 1.0/ m². By this, the fallings of the resin from the first resin layer 11 are suppressed. The present inventors have found that the fallings of the resin from the first resin layer 11 are often due to swellings and cracks of certain sizes or larger on the wet paper web carrying surface 111. Furthermore, the present inventors have reached a finding that the fallings of the resin from the first resin layer 11 could be suppressed by controlling the number of such swellings and cracks at or below a predetermined value.

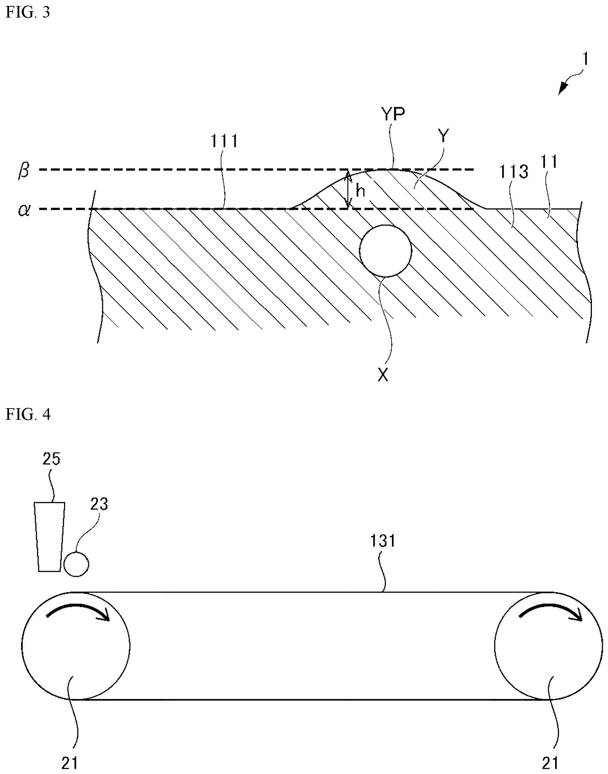

The height of a swelling generated on a wet paper web carrying surface of a wet paper transfer belt can be measured as follows. FIG. 2 is an enlarged photograph for illustrating swellings on a wet paper web carrying surface of a wet paper transfer belt. FIG. 3 is a schematic cross-sectional diagram of a first resin layer for illustrating a method of measuring the height of the swelling generated on the wet paper web carrying surface of the wet paper transfer belt. First, a wet paper web carrying surface of a wet paper transfer belt as shown in FIG. 2 is searched by visual and tactile senses for any swelling. In a search by visual sense, a microscope, etc., can be used, though assessing by visual inspection is convenient. Moreover, a swelling with a relatively high height can also easily be assessed by tactile sense.

Next, the first resin layer of the wet paper transfer belt with a swelling is observed in cross section to measure the height of the swelling. Here, cross-sectional observation can be carried out by, for example, using an optical microscope such as a digital microscope. For example, in FIG. 3, a bubble X have been generated in the first resin layer 11 of the wet paper transfer belt 1, and as a result, the resin 113 of the first resin layer 11 has been extruded by the bubble X toward the wet paper web carrying surface 111 side, resulting in a swelling Y. Here, it is assumed that there is a straight line α that passes through the region of the wet paper web carrying surface 111 avoiding the swelling Y. Next, it is assumed that there is a tangent line β that passes through the vertex YP, which is the vertex of the swelling Y, and is parallel to the straight line α. Then, the distance h between the straight line α and the tangent line β is defined as the height of the swelling.

Cracks can be identified and observed by visually inspecting the wet paper web carrying surface 111. The length of a crack is then obtained by measuring the length along the shape of the crack. In this case, the length of the crack is not the direct distance between the end points, but the length along the shape of the crack. If the crack is branched, the length of the branch part of the crack is also included in the length of the crack.

The total of the number of swellings whose height is equal to or higher than 50 µm and the number of cracks whose length is equal to or longer than 10 mm in the wet paper web carrying surface 111 of the wet paper transfer belt 1 is preferably equal to or less than 1.0/m², more preferably 0.50/m². By this, the fallings of the resin from the first resin layer 11 of the wet paper transfer belt 1 can be furthermore suppressed.

The arithmetic average roughness Ra based on JIS B 0601 of the wet paper web carrying surface 111 is not particularly limited, though it is preferably equal to or more than 0.3 and equal to or less than 20 µm, more preferably equal to or more than 0.5 and equal to or less than 12.0 µm, and further preferably equal to or more than 1.0 and equal to or less than 10.0 µm. This further ensures that the wet paper transfer belt 1 has an excellent wet paper adherence to wet paper web W and detachability thereto as mentioned above.

Moreover, in the present embodiment, the resin 113 that constitutes the first resin layer 11 is formed using a resin composition comprising an aqueous dispersion of urethane resin, and the resin composition comprises an organic solvent whose boiling point is equal to or higher than 100 °C at 1 atm. By this, the generation of swellings and cracks can be suppressed, and the number of swellings equal to or higher than 50 µm in height and cracks equal to or longer than 10 mm in length as mentioned above can easily be achieved. The reason why swellings and cracks can be suppressed in this way is unknown, though it is speculated as follows.

As mentioned above, the resin composition comprises an organic solvent with relatively high boiling point, which remains in the resin composition during the formation of the first resin layer 11 even when water and other solvents with lower boiling point contained in the resin composition volatilize and can thereby suppress a rapid increase in the viscosity of the resin composition and the formation of a surface coating film which inhibits drying. As a result, even if bubbles are generated due to the volatilization of the water or other solvents with lower boiling point, these bubbles will be removed from the resin composition and the generation of a swellings will be suppressed. Moreover, even after the water or other solvents with a lower boiling point are evaporated, the resin composition still comprises the organic solvent having a relatively high boiling point and thereby maintains its flexibility, and is less likely to generate cracks due to the shrinkage of the resin composition associated with the volatilization of water or other solvents with a lower boiling point. It is considered that the generation of swellings and cracks in the first resin layer 11 is suppressed by the above phenomenon.

Furthermore, the resin composition that forms the resin 113 comprises an aqueous dispersion of a urethane resin. The aqueous dispersion of a urethane resin comprises an aqueous urethane resin and can form a first resin layer 11 that is constituted by the aqueous urethane resin. Such an aqueous urethane resin constitutes a wet paper web carrying surface 111 of the first resin layer 11, which will impart hydrophilicity to the wet paper web carrying surface 111 and improve the adherence of the wet paper web W to the wet paper web carrying surface 111. Thus, by controlling the unevenness of the wet paper web carrying surface 111 by adjusting its surface roughness, it becomes easy to control the adherence and detachability of the wet paper web W. Moreover, because this imparts hydrophilicity to the wet paper web carrying surface 111 of the first resin layer 11, it becomes less prone to be soiled at the time of using the wet paper transfer belt 1.

On the other hand, in order to form an aqueous urethane resin, it is necessary to utilize an aqueous dispersion of the urethane resin. In this case, as mentioned above, there is a problem that swellings and cracks are likely to occur due to the solvent or the dispersion medium such as water or an organic solvent with a low boiling point contained in the aqueous dispersion of the urethane resin. However, in the present embodiment, the resin composition comprises an organic solvent with a relatively high boiling point, the generation of the problems due to the aqueous dispersion of the urethane resin is suppressed.

Hereinbelow, the resin composition to form the resin 113 will be described. The resin composition comprises at least an organic solvent whose boiling point at 1 atm is equal to or higher than 100 °C (hereinbelow may be referred to simply as "a solvent with a high boiling point"), and an aqueous dispersion of an urethane resin.

The solvent with a high boiling point is not particularly limited as long as it is an organic solvent whose boiling point at 1 atm is equal to or higher than 100 °C. Any publicly known organic solvent(s) can be used alone or in combination or two or more. Such a solvent with a high boiling point is not particularly limited, and includes, for example, a lactam ring-containing solvent such as 1-methyl-2-pyrrolidone (204 °C) or 1-ethyl-2-pyrrolidone (218 °C), an amide solvent such as 3-methoxy-N,N-dimethylpropanamide (215 °C), dimethylformamide (153 °C), dimethylacetamide (165 °C) or 3-butoxy-*N*,*N*-dimethylpropanamide (252 °C), an acid ether ester solvent such as ethyl-3-ethoxy propionate (165 °C), a ketone solvent such as diisobutyl ketone (168 °C) or isophorone (215 °C), a sulfoxide solvent such as dimethylsulfoxide (189 °C), a glycol solvent such as ethyleneglycol (197 °C) or 1,3-buthyleneglycol (207 °C), a glycol ester solvent such as 1,4-butanediol diacetate (230 °C), 1,3-buthyleneglycol diacetate (232 °C), diethyleneglycol monobuthyl ether acetate (247 °C) or 1,6-hexanediol diacetate (260 °C), glycolether solvent such as diethyleneglycol monoethyl ether (196 °C), diethyleneglycol monobuthyl ether (230 °C), triethyleneglycol monobuthyl ether (278 °C), dipropyleneglycol dimethyl ether (175 °C), dipropyleneglycol-*n*-propyl ether (212 °C), dipropyleneglycol methyl-*n*-propyl ether (203 °C), dipropyleneglycol-*n*-butyl ether (230 °C), dipropyleneglycol methyl-n-butyl ether (227 °C), tripropyleneglycol methyl ether (241 °C), tripropyleneglycol*-n*-butyl ether (276 °C), dipropyleneglycol phenyl ether (243 °C), dipropyleneglycol methyl ether acetate (209 °C) or diethyleneglycol monoethyl ether acetate (218 °C), an alcoholic solvent such as benzylalcohol (205 °C), and an ester solvent such as triacetin (259 °C), dimethyl glutarate (214 °C) or γ-butyrolactone (204 °C), and the like. Each temperature in parentheses indicates the boiling point of each compound at 1 atm.

Among those mentioned above, the solvent with a high boiling point comprises preferably one or more type(s) selected from a group consisting of a lactam ring containing solvent, an amide solvent and a glycol ether solvent, more preferably one or more type(s) selected from a group consisting of 1-methyl-2-pyrrolidone, 1-ethyl-2-pyrrolidone, dipropyleneglycol dimethylether, 3-methoxy-*N,N*-dimethylpropanamide and 3-butoxy*-N,N-*dimethylpropanamide, more preferably one or more type(s) selected from a group consisting of 1-ethyl-2-pyrrolidone, dipropyleneglycol dimethylether, 3-methoxy-*N*,*N*-dimethylpropanamide and 3-butoxy-*N,N*-dimethylpropanamide, further preferably one or more type(s) selected from a group consisting of 1-ethyl-2-pyrrolidone, 3-methoxy-*N,N*-dimethylpropanamide and 3-butoxy-*N,N-*dimethylpropanamide.

Moreover, the boiling point at 1 atm of each of the organic solvents constituting the solvent with a high boiling point is not limited as long as it is equal to or higher than 100 °C, though the solvent with a high boiling point preferably comprises an organic solvent whose boiling point is equal to or higher than 170 °C, more preferably an organic solvent whose boiling point at 1 atm is equal to or higher than 200 °C, further preferably an organic solvent whose boiling point at 1 atm is equal to or higher than 205 °C. By this, the aforementioned effects of the solvent with a high boiling point can more efficiently be achieved, and as a result the generation of swellings and cracks can be furthermore suppressed.

Furthermore, the vapor pressure at 20 °C of the solvent with a high boiling point is not particularly limited, though it is, for example, equal to or less than 200 Pa, preferably equal to or less than 150 Pa, more preferably equal to or less than 100 Pa. By this, the aforementioned effects of the solvent with a high boiling point can more efficiently be achieved, and as a result the generation of swellings and cracks can be furthermore suppressed.

Moreover, the content of the solvent with a high boiling point in the resin composition is not particularly limited, though it is, for example, equal to or more than 1 mass % and equal to or less than 40 mass %, preferably equal to or more than 5 mass % and equal to or less than 30 mass %, more preferably equal to or more than 7 mass % and equal to or less than 25 mass %.

An aqueous dispersion of a urethane resin is a dispersion in which an aqueous urethane resin has been dispersed in an aqueous dispersion medium. The aqueous dispersion of a urethane resin includes an anionic, nonionic or cationic self-emulsifying urethane resin aqueous dispersion emulsified by self-emulsification, and a forced-emulsion type urethane resin aqueous dispersion forcibly emulsified by an addition of an emulsifier, etc., of which either one may be used, or both may be used in combination. The aqueous dispersion of a urethane resin comprises at least an aqueous urethane resin and an aqueous dispersion medium.

The aqueous urethane resin is formed using a polyisocyanate compound, a polyol, and a curing agent if needed. Therefore, hereinbelow, the polyisocyanate compound, polyol and curing agent that constitute the urethane resin will be described.

The polyisocyanate compound includes an aromatic polyisocyanate compound and an aliphatic polyisocyanate compound, which can be used either alone or in combination of two or more types. The aromatic polyisocyanate compound includes, for example, 2,4-tolylene-diisocyanate (2,4-TDI), 2,6-tolylene-diisocyanate (2,6-TDI), 4,4'-methylenebis(phenylisocyanate) (MDI), *p*-phenylene-diisocyanate (PPDI), dimethylbiphenylene diisocyanate (TODI), naphthalene-1,5-diisocyanate (NDI), 4,4-dibenzyldiisocyanate (DBDI), xylylene diisocyanate (XDI), tetramethylxylylene-diisocyanate (TMXDI), polymethylene polyphenyl polyisocyanate (polymeric MDI), and the like. The aliphatic polyisocyanate compound is not particularly limited, though it includes, for example, a chain-like aliphatic polyisocyanate such as 1,6-hexamethylene diisocyanate (HDI) or 1,5-pentamethylene diisocyanate, and an alicyclic polyisocyanate such as 1-isocyanate-3-isocyanatemethyl-3,5,5-trimethylcyclohexane (IPDI), dicyclohexylmethane-4,4'-diisocyanate (H12MDI), 1,3-cyclohexyldiisocyanate, 1,4-cyclohexyldiisocyanate (CHDI), 1,3-bis-(isocyanatemethyl)cyclohexane and 1,4-bis-(isocyanatemethyl)cyclohexane (H6XDI), which can be used either alone or in combination of two or more types.

Note that the aqueous urethane resin generally comprises as a constituent an aliphatic polyisocyanate compound. Among those mentioned above, the aqueous urethane resin preferably comprises one or more type(s) selected from a group consisting of 1-isocyanate-3-isocyanate methyl-3,5,5-trimethylcyclohexane (IPDI), dicyclohexylmethane-4,4'-diisocyanate (H12MDI) and 1,6-hexamethylene diisocyanate (HDI).

The polyol compound is not particularly limited, and includes a long-chain polyol compound, for example, a polyester polyol such as polycaprolactone polyol and polyethylene adipate, a polyether polyol such as polyethylene glycol, polyoxypropylene glycol, polyhexamethylene ether glycol and polytetramethylene ether glycol (PTMG), a polycarbonate polyol such as polycarbonate diol, polyether carbonate diol, trimethylolpropane, polybutadiene polyol, perfluoropolyether polyol, a silicon polyol such as silicon diol, which can be used either alone or in combination of two or more types.

The polycarbonate polyol is not particularly limited, though it includes, for example, a polycarbonate polyol synthesized from a polyol raw material of the polycarbonate polyol and a polycarbonate source. The polyol raw material of the polycarbonate polyol is not particularly limited, though it includes, such as, for example, a straight chain or branched chain alkylene glycol having 2 or more and 20 or less of carbon atoms, a hydroxyl group-containing cyclic hydrocarbon having 3 or more and 20 or less of carbon atoms, which can be used either alone or in combination of two or more types. The above-described straight chain alkylene glycol includes, for example, ethylene glycol, propanediol, butanediol, pentanediol, hexanediol, heptanediol, octanediol, nonanediol, decanediol, undecanediol, dodecanediol, and the like. The above-described branched chain alkylene glycol includes, for example, 2-methyl-1,3-propanediol, 2,2-dimethyl-1,3-propanediol, 3-methyl-1,5-pentanediol, 2-methyl-1,8-octanediol, and the like. The above-described hydroxyl group-containing cyclic hydrocarbon includes, for example, a hydroxyl group-containing alicyclic alkane such as 1,3-cyclohexane diol, 1,4-cyclohexane diol and 1,4-cyclohexane dimethanol.

The curing agent having an active hydrogen group is not particularly limited, and one or more type(s) of compound(s) selected from a group consisting of polyol compounds and polyamines can be used.

As the polyol compound that can be contained in the curing agent, in addition to the aforementioned long-chain polyol compounds, various aliphatic polyol compounds and various alicyclic or aromatic polyol compounds can be used.

The aliphatic polyol compound is not particularly limited, and includes, for example, a alkylene glycol compound such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, 1,20-icosanediol, 2-methyl-1,3-propanediol, neopentylglycol, 2-butyl-2-ethyl-1,3-propanediol, 3-methyl-1,5-pentanediol, 2-ethyl-1,3-hexanediol, 2-methyl-1,8-octanediol, and a glycerin, ditrimethylolpropane, trimethylolpropane (TMP), pentaerythritol, and dihydroxymethyl propionic acid (DHPA), and the like.

The alicyclic polyol compound is not particularly limited, and includes, for example, 1,4-cyclohexane dimethanol, hydrogenated bisphenol A, and the like.

The aromatic polyol compound is not particularly limited, and includes, for example, hydroquinone bis-β-hydroxyethylether (HQEE), hydroxyphenylether resorcinol (HER), 1,3-bis(2-hydroxyethoxybenzene), 1,4-bis(2-hydroxyethoxybenzene), bisphenol A, an alkylene oxide adduct of bisphenol A, bisphenol S, an alkylene oxide adduct of bisphenol S, and the like.

The polyamine is not particularly limited, and includes hydrazine, ethylenediamine, 4,4'-methylene-bis-(2-chloroaniline) (MOCA), dimethylthiotoluene diamine (DMTDA), diethyltoluene diamine (DETDA), trimethylene glycol di(*p*-aminobenzoate) (TMAB), 4,4'-methylene-bis-(3-chloro-2,6-diethylaniline) (MCDEA), 4,4'-methylene-bis-(2,6-diethylaniline) (MDEA), triisopropanolamine (TIPA), *p*-bis(aminocyclohexyl)methane (PACM), naphthalene-1,5-diamine, xylylene diamine, phenylenediamine, toluene-2,4-diamine, *t*-butyltoluene diamine, 1,2-bis(2-aminophenylthioethane), 2-(2-aminoethylamino)ethanol, and the like.

Note that the aforementioned isocyanate compound, polyol and/or curing agent may be substituted with one or more hydrophilic group(s). That is, the aqueous urethane resin may comprise one or more hydrophilic group(s). By this, the aqueous urethane resin can easily be self-dispersed in water, and it becomes easy to obtain an aqueous dispersion of the urethane resin. Moreover, the hydrophilic groups contained in the aqueous urethane resin can improve the hydrophilicity of the wet paper web carrying surface 111 of the wet paper transfer belt 1, and can improve the adherence of the wet paper web. Such a hydrophilic group is not particularly limited, though it includes a carboxyl group, a sulfo group, a phosphate group, a hydroxyl group, a phenolic hydroxyl group, an amino group, and the like. Of these hydrophilic groups, one may be substituted, or two or more may be substituted. Alternatively, two or more compounds may be substituted with hydrophilic groups. In this case, the hydrophilic groups to substitute may be the same or different in these compounds.

Among those mentioned above, the carboxyl group, sulfo group, phosphate group, hydroxyl group, phenolic hydroxyl group or amino group, etc., can be a crosslinking point for a crosslinking agent mentioned later and thus contributes to an improvement in water resistance and durability of the first resin layer 11. Therefore, the isocyanate compound, polyol and/or curing agent preferably comprise(s) one or more type(s) selected from a group consisting of a carboxyl group, a sulfo group, a phosphate group, a hydroxyl group, a phenolic hydroxyl group and an amino group.

Note that the introduction of a hydrophilic group to an aqueous urethane resin becomes easy when using a polyol having three or more hydroxyl groups such as glycerin, ditrimethylol propane, trimethylol propane (TMP) or pentaerythritol, or a polyol having a hydrophilic group other than a hydroxyl group such as dihydroxymethylpropionic acid (DHPA).

An aqueous dispersion medium principally comprises water, and further optionally comprises an organic solvent. The organic solvent is not particularly limited, and includes, for example, an alcoholic solvent such as methanol, ethanol, 1-propanol, isopropyl alcohol, 1-butyl alcohol, 2-butanol, isobutyl alcohol, *tert*-butyl alcohol or benzyl alcohol, a glycol solvent such as methanediol, 1,2-ethanediol (ethyleneglycol), 1,2-propanediol, 1,3-propanediol, 1,2-butanediol, 1,3-butanediol (1,3-buthyleneglycol), 1,4-butanediol, 2,3-butanediol, 2-butene-1,4-diol, 1,4-butanediol or diethyleneglycol, a polyhydric alcoholic solvent such as 3-methoxy-1,2-propanediol, glycerin and the like, a glycol ester solvent such as 1,4-butanediol diacetate, 1,3-buthyleneglycol diacetate, diethyleneglycol monobuthyl ether acetate or 1,6-hexanediol diacetate, a glycolether solvent such as ethyleneglycol monomethyl ether, ethyleneglycol monoethyl ether, ethyleneglycol monobuthyl ether, dipropyleneglycol dimethyl ether, propyleneglycol monomethyl ether propionate, diethyleneglycol monoethyl ether, diethyleneglycol monobuthyl ether, triethyleneglycol monobuthyl ether, dipropyleneglycol dimethyl ether, dipropyleneglycol-*n*-propyl ether, dipropyleneglycol methyl-*n*-propyl ether, dipropyleneglycol-*n*-butyl ether, dipropyleneglycol methyl-*n*-butyl ether, tripropyleneglycol methyl ether, tripropyleneglycol-n-butyl ether, dipropyleneglycol phenyl ether, dipropyleneglycol methyl ether acetate or diethyleneglycol monoethyl ether acetate, a ketone solvent such as acetone, methylethyl ketone, methylpropyl ketone, methylisobutyl ketone, diethylketone, dipropyl ketone, diisobutyl ketone, cyclohexanone, diacetone alcohol or isophorone, an ether solvent such as dimethyl ether, diethyl ether, di-*n*-propyl ether, diisopropyl ether, di-*n*-butyl ether, di-*t*-butyl ether, *t*-buthylmethyl ether, 1,4-dioxane or tetrahydrofuran, an ester solvent such as ethyl acetate, methyl acetate, butyl acetate, sec-butyl acetate, methoxybutyl acetate, amyl acetate, *n*-propyl acetate, isopropyl acetate, methyl lactate, ethyl lactate, butyl lactate, triacetin, γ-butyrolactone or dimethyl glutarate, an acid ether ester solvent such as ethyl-3-ethoxy propionate, a carbonate ester solvent such as dimethyl carbonate, diethyl carbonate and ethymethyl carbonate, a halide solvent such as methylene chloride, trichloroethylene, perchloroethylene, 1-bromopropane, chloroform or carbon tetrachloride, a lactam ring containing solvent such as 2-pyrrolidone, 1-methyl-2-pyrrolidone or 1-ethyl-2-pyrrolidone, an amide solvent such as 3-methoxy-*N,N*-dimethylpropanamide, dimethylformamide, dimethylacetamide or 3-butoxy-*N,N*-dimethylpropanamide, and sulfolane, morpholine, acetonitrile and propionitrile, etc, which can be used alone or in combination of two or more.

Moreover, as listed above, the aqueous dispersion medium may comprise the solvent with a high boiling point mentioned above as an organic solvent. In this case, the operation of separately adding the solvent with a high boiling point to the resin composition can be omitted.

Moreover, the aqueous dispersion of a urethane resin may comprise an emulsifying agent. As the emulsifying agent, any emulsifying agent can be used alone, or two or more emulsifying agents can be used in combination.

The aqueous dispersion of an urethane resin explained above is contained in the resin composition, such that the aqueous urethane resin is, for example, equal to or more than 5 mass % and equal to or less than 90 mass %, preferably equal to or more than 10 mass % and equal to or less than 70 mass %, more preferably equal to or more than 15 mass % and equal to or less than 50 mass %.

Moreover, the resin composition may comprise a crosslinking agent. The crosslinking agent contained in the resin composition crosslinks the aqueous urethane resin and contributes to an improvement in strength of the first resin layer 11. Such an crosslinking agent is not particularly limited, and includes, for example, a carbodiimide crosslinking agent, a melamine crosslinking agent, an epoxy crosslinking agent, and an isocyanate crosslinking agent, and the like.

The content of the crosslinking agent in the resin composition is not particularly limited, and is, for example, equal to or more than 0.1 mass % and equal to or less than 30 mass %, preferably equal to or more than 0.5 mass % and equal to or less than 20 mass %, more preferably equal to or more than 1.0 mass % and equal to or less than 10 mass %.

Moreover, the resin composition may optionally comprise a PH adjuster such as ammonia, a leveling agent such as nonionic acetylene glycol, a flavoring oil, a metal soap, an anti-foaming agent such as a non-ionic surfactant, a viscosity modifier such as an acrylic resin emulsion, and the like.

The resin composition may also further comprise a thermosetting resin such as an urethane resin other than the aqueous urethane resin, an epoxy resin, acrylic resin, and the like, or a thermoplastic resin such as a polyamide resin, a polyarylate resin and a polyester resin, and the like.

Moreover, an inorganic filler such as titanium oxide, kaoline, clay, talc, diatomaceous earth, calcium carbonate, calcium silicate, magnesium silicate, silica and mica may be included together with a resin 113 that constitutes the first resin layer 11, either alone or in combination of two or more types. That is, the resin composition may comprise an inorganic filler described above.

Note that the composition and type of the resin material and the inorganic filler in the first resin layer 11 may be different or identical for each part in the first resin layer 11.

Moreover, the first resin layer 11 preferably has a characteristic that water does not permeate it. That is, the first resin layer 11 preferably is water-impermeable.

The reinforcing fibrous substrate layer 13 is composed of a reinforcing fibrous substrate 131 and a resin 133. The resin 133 is present in the reinforcing fibrous substrate layer 13 such that it fills the spaces between fibers in the reinforcing fibrous substrate 131. That is, a part of the resin 133 is impregnated in the reinforcing fibrous substrate 131, whereas the reinforcing fibrous substrate 131 is embedded in the resin 133.

The reinforcing fibrous substrate 131 is not particularly limited, and, for example, a woven fabric consisting of warp yarns and weft yarns woven by a weaving machine, etc., may generally be used. Also, an unwoven grid-like material in which warp yarn rows and weft yarn rows are superimposed on each other can also be used.

The fineness of the fibers constituting the reinforcing fibrous substrate 131 is not particularly limited, and can be, for example, equal to or higher than 300 dtex and equal to or less than 10,000 dtex, preferably, equal to or higher than 500 dtex and equal to or less than 6,000 dtex.

Moreover, the fineness of a fiber that constitutes the reinforcing fibrous substrate 131 may be different depending on the part in which the fiber is used. For instance, the warp yarns and weft yarns of the reinforcing fibrous substrate 131 may have different fineness.

As ingredients of a reinforcing fibrous substrate 131, a polyester (polyethylene terephthalate, polybutylene terephthalate, etc.), an aliphatic polyamide (polyamide 6, polyamide 11, polyamide 12, polyamide 612, etc.), an aromatic polyamide (aramid), polyvinylidene fluoride, polypropylene, polyether ether ketone, polytetrafluoroethylene, polyethylene, wool, cotton, metal, etc., can be used either alone or in combination of two or more.

Materials for the resin 133 are not particularly limited, and, for example, aforementioned various resins that can be used as the resin 113 of the first resin layer 11 can be used either alone or in combination of two or more types. Alternatively, the resin 133 may comprise a thermosetting resin such as a urethane resin other than the aqueous urethane resin, an epoxy resin, acrylic resin and the like, or a thermoplastic resin such as a polyamide resin, a polyarylate resin, a polyester resin, and the like. The resin 133 may be identical to or different from the resin 113 that constitutes the first resin layer 11 for their types or compositions.

Note that the composition and type of the resin 133 in the reinforcing fibrous substrate layer 13 may be different or identical for each part in the reinforcing fibrous substrate layer 13.

The second resin layer (roll-side resin layer) 15 is a layer which principally be constituted with a resin 153 provided on one principal plane of the reinforcing fibrous substrate layer 13.

The second resin layer 15, on the principal plane that is opposite to the principal plane joined to the reinforcing fibrous substrate layer 13, constitutes a roll contact plane 151 that is to be in contact with a roll mentioned later. The wet paper transfer belt 1 can obtain a motive power from a roll for transferring a wet paper web via the contact of the roll contact plane 151 with the roll when being used.

As the resin 153 which constitutes the second resin layer 15, the resin materials as mentioned above that can be used in the first resin layer 11 or the reinforcing fibrous substrate layer 13 can be used alone or in combination of two or more. The resin 153 that constitutes the second resin layer 15 may be identical to or different from the resin 113 that constitutes the first resin layer 11 or the resin 133 that constitutes the reinforcing fibrous substrate layer 13 for their types and compositions.

In particular, the resin 153 that constitute the second resin layer 15 is preferably a urethane resin in view of mechanical properties, wear resistance and flexibility.

Moreover, the second resin layer 15 may comprise one or more inorganic filler(s) in a similar way to the first resin layer 11.

Note that the composition and type of the resin material and the inorganic filler in the second resin layer 15 may be different or identical for each part in the second resin layer 15.

The dimensions of the wet paper transfer belt 1 as mentioned above is not particularly limited, and can appropriately be set according to its application.

For example, the width of the wet paper transfer belt 1 is not particularly limited, though it can be from 700 mm to 13500 mm, preferably, from 2500 mm to 12500 mm.

Moreover, for example, the length (circumference) of the wet paper transfer belt 1 is not particularly limited, though it can be from 4 m to 35 m, preferably from 10 m to 30 m.

The thickness of the wet paper transfer belt 1 is not particularly limited, though for example, it can be from 1.5 mm to 7.0 mm, preferably from 2.0 mm to 6.0 mm.

The thickness of the wet paper transfer belt 1 may be different or identical for each part.

The wet paper transfer belt 1 as described above can be produced by, for example, a method of producing a wet paper transfer belt according to the present embodiment mentioned later.

As above, with respect to the wet paper transfer belt 1 according to the present embodiment, in the wet paper web carrying surface 111 of the first resin layer 11, the total of the numbers of swellings whose height is equal to or higher than 50 µm and cracks whose length is equal to or higher than 10 mm is equal to or less than 1.0/ m². By this, the fallings of the resin from the first resin layer 11 are suppressed. Furthermore, in the present embodiment, the first resin layer 11 of the wet paper transfer belt 1 is formed using a resin composition comprising an aqueous dispersion of a urethane resin, and the resin composition comprises an organic solvent whose boiling point at 1 atm is equal to or higher than 100 °C. By this, the generation of swellings and cracks can be suppressed, and the number of swellings equal to or higher than 50 µm in height and cracks equal to or longer than 10 mm in length as mentioned above can easily be achieved.

A modification of the aforementioned wet paper transfer belt 1 includes an embodiment in which the wet paper transfer belt 1 comprises a layer of batt fibers needled into the wet paper web-carrying side and/or the roll side of the reinforcing fibrous substrate 131, and in which the aforementioned resin material is impregnated in these batt fibers. As materials for the batt fibers, the materials that can be used for the reinforcing fibrous substrate 131 can be used either alone or in combination of two or more types.

### <2. Methods of Producing Papermaking Belts>

Next, one example of preferred embodiment of a method of producing the aforementioned papermaking belt of the present invention will be described. FIGs. 4 to 7 are schematic diagrams showing one example of a preferred embodiment of a method of producing a papermaking belt according to the present invention.

The method of producing the papermaking belt of the present invention comprises a step of forming at least one resin layer using a resin composition comprising an aqueous dispersion of a urethane resin, wherein the resin composition comprises an organic solvent whose boiling point at 1 atm is equal to or higher than 100 °C. Hereinbelow, as an example for the papermaking belt, the aforementioned wet paper transfer belt 1 will be described as an example. Accordingly, a method of producing a wet paper transfer belt 1 of the present embodiment comprises a step of forming a annular laminate body 1' comprising a second resin layer (roll-side resin layer) 15 as the innermost layer, and a first resin layer (wet paper web-carrying side resin layer) 11 as the outermost layer (laminating step).

In this laminating step, an annular and band-shaped laminated body 1' is formed, which comprises the second resin layer 15 as the innermost layer and a first resin layer precursor 11' as the outermost layer. The laminated body 1' may be formed by any method, though, in the present embodiment, first, a resin material (resin composition) for the second resin layer 15 is applied to the reinforcing fibrous substrate 131 such that the resin material will penetrates the reinforcing fibrous substrate 131, thereby forming a reinforcing fibrous substrate layer 13, while at the same time further forming the second resin layer 15 inside the reinforcing fibrous substrate layer 13. Next, to the outer surface of the formed reinforcing fibrous substrate layer 13, a resin composition for a wet paper web-carrying side resin layer 11 is applied to form a wet paper web-carrying side resin layer precursor 11'.

In specific, as shown in FIG. 4, the annular and band-shaped reinforcing fibrous substrate 131 is hung over two parallelly placed rolls 21 such that the substrate is in contact with the rolls.

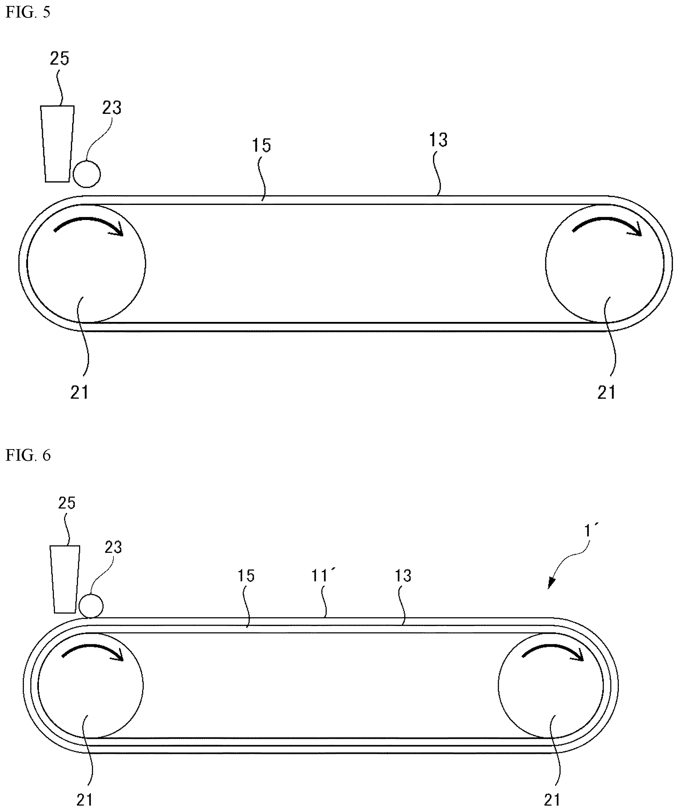

Next, as shown in FIG. 5, to the outer surface of the reinforcing fibrous substrate 131, a resin composition to constitute the second resin layer 15 is added. The addition of the resin composition can be carried out by any method, though, in the present embodiment, the resin composition is added to the reinforcing fibrous substrate 131 by discharging the resin composition from a resin discharge port 25 while rotating the reinforcing fibrous substrate 131 by means of the rolls 21. Furthermore, at the same time, the given resin composition is uniformly applied to the reinforcing fibrous substrate 131 using a coater bar 23. The resin composition applied at this time can penetrate into the reinforcing fibrous substrate 131. Therefore, in the present embodiment, it is possible to form not only the resin 133 contained in the reinforcing fibrous substrate 131, but also the resin 153 that constitutes the second resin layer 15, and thus it is possible to form the reinforcing fibrous substrate layer 13 and the second resin layer 15 at the same time.

Next, as shown in FIG. 6, a resin composition that is for constituting a first resin layer 11 is given onto the outer surface of the formed reinforcing fibrous substrate layer 13. The addition of the resin composition can be carried out by any method, though, in the present embodiment, the resin material is added to the outer surface of the reinforcing fibrous substrate layer 13 by discharging the resin composition from the resin discharge port 25 while rotating the formed reinforcing fibrous substrate layer 13 and the second resin layer 15 by means of the rolls 21. Furthermore, at the same time, the given resin composition is uniformly applied using the coater bar 23. Note that the resin composition that constitutes each layer may be given as a mixture with the aforementioned inorganic filler(s).

As mentioned above, in the present embodiment, the resin 113 of the first resin layer 11 is formed in this step using a resin composition as mentioned above which comprises a solvent with a high boiling point. Then, as shown in FIG. 6, to the outer surface of the reinforcing fibrous substrate layer 13, a resin composition for constituting the first resin layer 11 is added. This suppresses the generation of swellings and cracks at the time of forming the first resin layer 11. That is, the resin composition comprises an organic solvent with relatively high boiling point, which remains in the resin composition during the formation of the first resin layer 11 even when water and other solvent with lower boiling point contained in the resin composition volatilize, and can thereby suppress a rapid increase in the viscosity of the resin composition and the formation of a surface coating film which inhibits drying. As a result, even if bubbles are generated due to the volatilization of the water or other solvents with lower boiling point, these bubbles will be removed from the resin composition and the generation of a swellings will be suppressed. Moreover, even after the water or other solvents with a lower boiling point are evaporated, the resin composition still comprises the organic solvent having a relatively high boiling point and thereby maintains its flexibility, and is less likely to generate cracks due to the shrinkage of the resin composition associated with the volatilization of water or other solvents with a lower boiling point.

Next, the applied resin composition is dried and crosslinked. This yields a laminated body 1' in which a first resin layer precursor 11', the reinforcing fibrous substrate layer 13 and the second resin layer 15 have been laminated in this order from the outer surface. A method for drying/crosslinking the resin material is not particularly limited, though it can be carried out, for example, by heating, ultraviolet irradiation, and the like.

When the resin composition is dried/crosslinked by heating, methods such as a far-infrared heater, hot air, etc., can be used.

Moreover, when the resin composition is dried/crosslinked by heating, the temperature for heating the resin composition is preferably from 60 °C to 150 °C, and more preferably from 90 °C to 140 °C. The heating time may be, for example, from 0.5 to 30 hours, preferably from 1 to 25 hours.

Next, the surface roughness of the outer surface of the wet paper web-carrying side resin layer precursor 11' is adjusted to form a wet paper web-carrying side resin layer 11 that has a wet paper web carrying surface 111 (roughness adjusting step). This yield a wet paper transfer belt 1 as a papermaking belt, in which the wet paper web carrying surface 111 has been formed.

The surface roughness of the outer surface can be adjusted, for example, by performing polishing and/or buffing process(s). In specific, as shown in FIG. 5, the polishing and/or buffing process(s) is(are) carried out by bringing a polishing apparatus 27 or buffing apparatus (not illustrated) into contact with the laminated body 1' being hung over two rolls 21. By this, a desired arithmetic average roughness of the wet paper web carrying surface 111 can be obtained.

If the wet paper web carrying surface 111 of the wet paper transfer belt 1 has already been in a desired condition before performing polishing or buffing process(s), the polishing and/or buffing process(s) can be omitted.

In the method of producing the papermaking belt described above, the second resin layer 15 was formed on the inner surface of the reinforcing fibrous substrate 131 by penetrating the resin composition for the roll-side was from the outer surface of the reinforcing fibrous substrate 131 (penetration production method). However, it is also possible to add the resin composition that constitutes the second resin layer 15 to the outer surface of the reinforcing fibrous substrate 131, thereby forming the second resin layer 15 laminated over the reinforcing fibrous substrate layer 13 and the outer surface, and then turning this inside-out, applying a resin composition for the first resin layer 11 on the outer surface (which was the inner surface before being turned inside-out) of the reinforcing fibrous substrate layer 13, thus forming the first resin layer precursor 11' (inside-out production method).

Furthermore, a modified embodiment of the method of producing a papermaking belt described above includes an embodiment in which a reinforcing fibrous substrate in which batt fibers have been needled into the wet paper web-carrying side and/or the roll-side of the reinforcing fibrous substrate is used in place of the reinforcing fibrous substrate 131 described above. By this, a wet paper transfer belt (a papermaking belt) can be obtained which comprises a first resin layer and/or a second resin layer in which the resin composition has been impregnated in the aforementioned batt fiber layer.

### <3. Papermaking Machine>

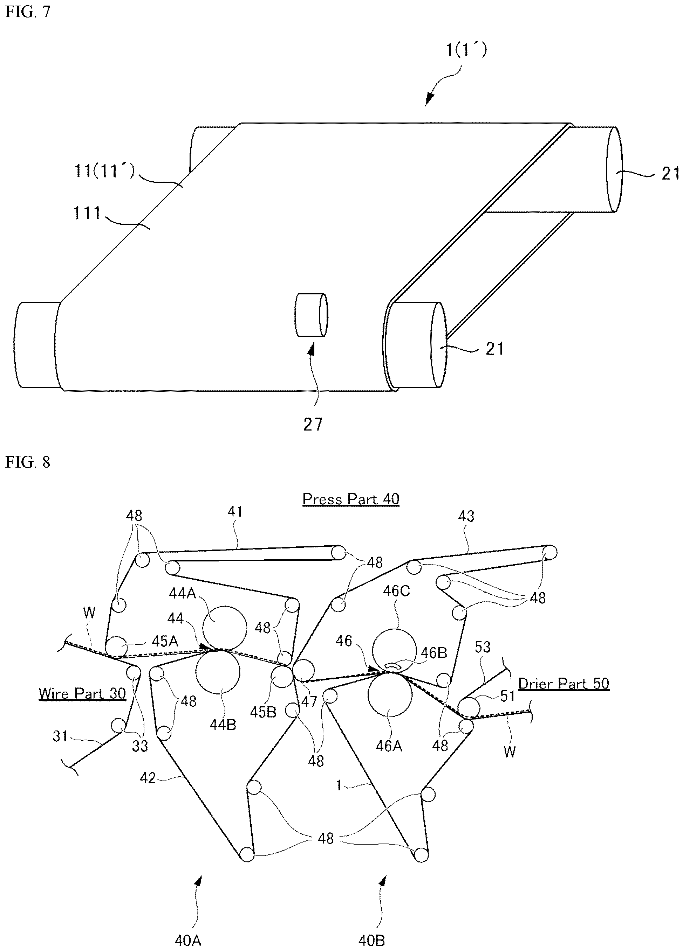

Next, an example of a papermaking machine to which a papermaking belt of the present invention has been applied will be described. FIG. 8 is a schematic diagram for illustrating an example of a papermaking machine to which a papermaking belt according to the present invention is applied. The papermaking machine shown in FIG. 8 is equipped with a wire part 30, a press part 40 and a dryer part 50. The wet paper web W shown by the broken line in the drawing is transferred in order from the wire part 30 to the press part 40, and to the dryer part 50, and is dehydrated, squeezed, and dried to form a paper in the process of being transferred. The following papermaking machine is a so-called closed-draw papermaking machine. Accordingly, in the delivery of the wet paper web W in the press part 40, the wet paper web W is carried on either of press felts 41, 42 and 43 and the wet paper transfer belt 1, and there is no place where the wet paper web W runs alone.

The wire part 30 supports and at the same time dehydrates a pulp slurry on a wire 31 to form a sheet-like wet paper web W. The wire part 30 is of a publicly known configuration, and a description about its main part is omitted. The wet paper web W dehydrated in the wire part 30 is transferred by the wire 31 which is supported by a guide roll 33, and delivered to the press felt 41 in the press part 40.

The press part 40 is constituted by a roll press section 40A and a shoe press section 40B. The roll press section 40A is principally composed of press felts 41 and 42, press rolls 44A and 44B, suction rolls 45A and 45B, and guide rolls 48.

The press felts 41 and 42 are endless band-shaped bodies that carry and transfer a wet paper web W. The press felts 41 and 42 are arranged to pass between the press rolls 44A and 44B, and are supported by a plurality of guide rolls 48 and suction rolls 45A and 45B. The suction roll 45A is arranged such that it supports the press felt 41 on the front side of the wet paper web W-transfer direction (flow direction) and brings the press felt 41 into contact with the wire 31. The wet paper web W is sucked by the suction roll 45A, and is thereby delivered from the wire 31 to the press felt 41.

The press rolls 44A and 44B constitute a roll press mechanism 44, press the wet paper web W together with the press felts 41 and 42, and squeeze the wet paper web W. The suction roll 45B is arranged such that it support the press felt 42 on the rear side of the wet paper web W-transfer direction (flow direction). The suction roll 45B sucks the wet paper web W supported by the press felts 41 and 42, detaches it from the press felt 41, and at the same time brings it to be carried only by the press felt 42.

The shoe press section 40B is principally composed of a wet paper transfer belt 1, a press felt 43, a shoe press mechanism 46, a suction roll 47 and guide rolls 48. The wet paper transfer belt 1 is as mentioned above. The press felt 43 is an endless band-shaped body that carries and transfers the wet paper web W. The wet paper transfer belt 1 and the press felt 43 are arranged to pass through the shoe press mechanism 46, and supported by a plurality of guide rolls 48 and the suction roll 47.

The suction roll 47 is arranged such that it supports the press felt 43 on the front side of the wet paper web W-transfer direction (flow direction), and brings the press felt 43 into contact with the press felt 42. The wet paper web W is sucked by the suction roll 47, and is thereby delivered from the press felt 42 to the press felt 43.

The shoe press mechanism 46 comprises a press roll 46A, a shoe 46B and a shoe press belt 46C. The shoe 46B has a recess corresponding to the shape of the press roll 46A, and, together with the press roll 46A via the shoe press belt 46C, compresses the wet paper web W carried by the wet paper transfer belt 1 and the press felt 43. Here, the wet paper web W which has been carried by the press felt 43 and transferred into the shoe press mechanism 46 is configured to be carried by the wet paper transfer belt 1 after passing through the shoe press mechanism 46.

In the dryer part 50, the wet paper web W is dried. The dryer part 50 is of a publicly known configuration, and a description about its main part is omitted. A dryer fabric 53 of the dryer part 50 is in contact with the wet paper transfer belt 1 while being supported by the suction roll 51. The wet paper web W is sucked by the suction roll 51, and is thereby delivered from the wet paper transfer belt 1 to the dryer fabric 53.

Here, the travelling situation of the wet paper web W in the above-described papermaking machine will be explained. Note that, because the wet paper web W is naturally of a continuous configuration, the transfer situation of a part of the wet paper web W will be explained.

First, the wet paper web W passes through the wire 31 of the wire part 30, the press felt 41 of the press part 40, and the roll press mechanism 44 successively, and is delivered from the press felt 42 to the press felt 43. It is then transferred by the press felt 43 to the shoe press mechanism 46. In the shoe press mechanism 46, the wet paper web W is pressurized by a shoe 46B via a shoe press belt 46C and a press roll 46A, in a state being sandwiched by the press felt 43 and the wet paper transfer belt 1.

Here, the press felt 43 is configured to be highly water-permeable, whereas the wet paper transfer belt 1 is configured to have a very low water permeability. Therefore, in the shoe press mechanism 46, moisture from the wet paper web W migrates to the press felt 43.

Immediately after getting out of the shoe press mechanism 46, the press felt 43, the wet paper web W, and the wet paper transfer belt 1 are rapidly released from the pressure and therefore their volumes will be expanded. Due to this expansion and the capillary phenomenon of the pulp fibers constituting the wet paper web W, a so-called rewetting phenomenon will occur where a part of moisture within the press felt 43 migrates to the wet paper web WW.

However, as mentioned before, the wet paper transfer belt 1 has been configured to have a very low water permeability, and it does not retain moisture therein. Therefore, the rewetting phenomenon hardly occur in the wet paper transfer belt 1, and the wet paper transfer belt 1 contributes to the improvement in the efficiency of squeezing water from the wet paper web. The wet paper web W is transferred by the wet paper transfer belt 1 after getting out of the shoe press mechanism 46. The wet paper web W is then adsorbed by the suction roll 51 and transferred by the dryer fabric 53 to the dryer part 50.

Here, after getting out of the shoe press mechanism 46, the wet paper transfer belt 1 is, on the wet paper web carrying surface (outer circumferential surface) 111 of the wet paper web-carrying side resin layer (the first resin layer) 11, required to have a function to transfer the wet paper web W being adhered thereon (wet paper web adherence) and a function to smoothly detach the wet paper web W when delivering it to the next part (wet paper web detachability). Thus, the wet paper transfer belt 1 is required to have conflicting functions, and it is necessary to strictly control the adherence of the wet paper web carrying surface 111 of the wet paper transfer belt 1 to the wet paper web W.

On the other hand, when a conventional wet paper transfer belt is used, the resin that constitutes the wet paper transfer belt would fall off while travelling due to friction or bending fatigue. If the resin of the papermaking belt falls in this way, the desired performance of the papermaking belt, for example, wet paper web adherence and detachability in a case of a wet paper transfer belt, would be altered, and it will become difficult to use the papermaking belt for a prolonged period. However, in the wet paper web carrying surface 111 of the wet paper transfer belt 1 according to the present embodiment, the falling of the resin is suppressed by keeping the number of swellings and cracks of a defined size or larger to a predetermined value or less. This suppresses changes in the wet paper web adherence and detachability of the wet paper web carrying surface 111 of the wet paper transfer belt 1.

As above, the present invention has been explained in detail based on its preferred embodiments, though the present invention is not limited thereto, and each constituent can be substituted with any constituent that is capable of performing a similar function, or alternatively, any constituent can be added.

Moreover, in the aforementioned description, a wet paper transfer belt has been described as an example of a papermaking belt, though the present invention is not limited to it. For example, a papermaking belt of the present invention may be a shoe press belt, or may be another papermaking belt. Furthermore, for example, the papermaking belt of the present invention may be produced without using an organic solvent whose boiling point at 1 atm is equal to or higher than 100 °C, as long as the number of the swellings and cracks that are equal to or larger than the specified size is equal to or less than the predetermined value, as mentioned above.

### [Examples]

Hereinbelow, the present invention will more specifically be described with examples, though the present invention is not to be limited to these examples.

### 1. Production of Wet Paper Transfer Belt

First, the wet paper transfer belts of Examples 1 to 4, and Comparative Examples 1 and 2 were produced according to the following configurations.

### <Reinforcing Fibrous Substrate>

For the reinforcing fibrous substrates of the wet paper transfer belts of Examples 1 to 4 and Comparative Examples 1 and 2, following materials were used.
Upper Warp Yarns: Monofilament twist yarns of 2000 dtex consisting of polyamide 6
Lower Warp Yarns: Monofilament twist yarns of 2000 dtex consisting of polyamide 6
Weft Yarns: Monofilament twist yarns of 1400 dtex consisting of polyamide 6
Weave Patterns: Top and bottom warp yarns, 40 yarns/5 cm; weft yarns, 40 yarns/5 cm; warp backed weave pattern

### <Formation of Laminated Body>

A reinforcing fibrous substrate was hung over two rolls, and then a resin composition that constitutes each roll-side resin layer was added to the outer surface of each reinforcing fibrous substrate, allow it to be impregnated and laminated to form a reinforcing fibrous substrate layer and a roll-side resin layer. Next, to the outer surface of each formed reinforcing fibrous substrate layer, a resin composition for forming each wet paper web-carrying side resin layer was added to laminate the wet paper web-carrying side resin layer. This laminated body which comprises a wet paper web carrying side resin layer, a reinforcing fibrous substrate layer, and a roll-side resin layer, in order from the outermost layer, was dried and crosslinked, yielding a semi-finished product of a wet paper transfer belt. The drying and crosslinking of the laminated body were carried out by heating at 145 °C for 24 hours using hot air.

As the resin compositions for constituting the layers of Examples 1 to 4 and Comparative Examples 1 and 2, those shown in Tables 1 and 2 were used, respectively. In tables, the crosslinking agent "MF" is a melamine formaldehyde resin ("Resimene^{®} 747", from INEOS Melamines LLC). Moreover, in Examples 1 to 4 and Comparative Examples 1 and 2, an amine salt of *p*-toluenesulfonic acid ("BYK-CATALYST 450", from BYK Japan KK) was used as a catalyst, a nonionic acetylenediol ("SURFYNOL^{®} 104PA", from Nissin Chemical Industry Co.,Ltd.) as a leveling agent, a mixture of mineral oils, metal soaps and polyether-type nonionic surfactant ("Nopco DF-122-NS", from SAN NOPCO LIMITED) as an anti-foaming agent, an acrylic resin emulsion (an acrylic resin "PRIMAL^{®} ASE-60", from Dow Chemical Japan Limited)) diluted with water at 15 mass % as a thickener, and "Ammonia Water (28%)", (JUNSEI CHEMICAL CO.,LTD.) as ammonia water, respectively.

Compositions of the urethane resin aqueous dispersions, PUD1 to PUD5, in Table 1 are shown in Table 2. In the tables, "PUD1" is an aqueous dispersion of a urethane resin ("ETERNACOLL^{®} UW-1005E", from UBE Corporation), "PUD2" is an aqueous dispersion of a urethane resin ("ETERNACOLL^{®} UW-1005A", from UBE Corporation), "PUDS" is an aqueous dispersion of polyurethane ("Bayhydrol^{®} 124", from COVESTRO AG), "PUD4" is an aqueous dispersion of a urethane resin ("ETERNACOLL^{®} UW-1005D-C1", from UBE Corporation), and "PUDS" is an aqueous dispersion of a urethane resin ("HYDRAN^{®} WLS-210", from DIC CORPORATION). Moreover, PU1 to PU5 in the urethane resin aqueous dispersions PUD1 to PUD5 are all urethane resins corresponding to the products described above, which are different from each other, while which are all considered to comprise an aliphatic isocyanate and polycarbonate-type diol as components.

Moreover, in the tables, "NEP" is 1-ethyl-2-pyrrolidone (boiling point at 1 atm = 218 °C, vapor pressure at 20 °C = 18 Pa), "MDMPA" is 3-methoxy-N,N-dimethylpropanamide (boiling point at 1 atm = 215 °C, vapor pressure at 20 °C = 76 Pa), "NMP" is 1-methyl-2-pyrrolidone (boiling point at 1 atm = 204°C, vapor pressure at 20 °C = 39 Pa), "DMM" is dipropyleneglycol dimethylether (boiling point at 1 atm = 175 °C, vapor pressure at 20 °C = 80 Pa), and "MEK" is 2-butanone (boiling point at 1 atm = 80 °C, vapor pressure at 20 °C = 105,000 Pa).

### [Table 1]

**Table 1**

| | | Example 1 | | Example 2 | | Example 3 | | Example 4 | | Comparative Example 1 | | Comparative Example 2 | |
|---|---|---|---|---|---|---|---|---|---|---|---|---|---|
| | | Type | Mass part | Type | Mass part | Type | Mass part | Type | Mass part | Type | Mass part | Type | Mass part |
| Resin composi tion formulat ion | Urethane resin aqueous dispersion | PUD1 | 79.37 | PUD2 | 77.95 | PUD3 | 77.15 | PUD4 | 79.37 | PUD5 | 76.23 | PUD5 | 66.51 |
| | Crosslinking agent | MF | 2.36 | MF | 2.58 | MF | 2.70 | MF | 2.36 | MF | 2.72 | MF | 2.36 |
| | Organic solvent | - | - | - | - | - | - | - | - | - | - | MEK | 13.23 |
| | Catalyst | - | 0.07 | - | 0.08 | - | 0.08 | - | 0.07 | - | 0.08 | CAT1 | 0.07 |
| | pH adjuster | 28 % NH₃ water | 0.79 | 28 % NH₃ water | 0.86 | 28 % NH₃ water | 0.90 | 28 % NH₃ water | 0.79 | 28 % NH₃ water | 0.91 | 28 % NH₃ water | 0.79 |
| | Inorganic filler | Kaolin cray | 15.13 | Kaolin cray | 16.51 | Kaolin cray | 17.33 | Kaolin cray | 15.13 | Kaolin cray | 17.44 | Kaolin cray | 15.13 |
| | Leveling agent | - | 0.72 | - | 0.79 | - | 0.82 | - | 0.72 | - | 0.83 | - | 0.72 |
| | Anti-foaming agent | - | 0.10 | - | 0.10 | - | 0.11 | - | 0.10 | - | 0.11 | - | 0.10 |
| | Thickener | - | 1.46 | - | 1.13 | - | 0.90 | - | 1.46 | - | 1.68 | - | 1.46 |

### [Table 2]

**Table 2**

| | PUD1 | | PUD2 | | PUD3 | | PUD4 | | PUD5 | |
|---|---|---|---|---|---|---|---|---|---|---|
| | Type | Mass % | Type | Mass % | Type | Mass % | Type | Mass % | Type | Mass % |
| Urethane resin | PU1 | 30 | PU2 | 33 | PU3 | 35 | PU4 | 30 | PU5 | 36 |
| Co-solvent | NEP | 18 | MDMPA | 12 | NMP | 15 | DMM | 10 | - | - |
| Water | - | 51 | - | 54 | - | 45 | | 59 | - | 63 |
| Neutralizing agent | Triethylamine | 1 | Triethylamine | 1 | Triethylamine | 5 | Triethylamine | 1 | Triethylamine | 1 |

### <Polishing and Buffing>

A polishing paper cloth from #80 to #600 was set on a polishing apparatus as appropriate, and the wet paper web carrying surfaces of the wet paper transfer belt (semi-finished products) of Examples 1 to 4 and Comparative Examples 1 and 2 were polished. Moreover, buffing was performed as appropriate in order to adjust the surface roughness of the wet paper web contact surface such that an arithmetic average roughness of the wet paper web carrying surface of the wet paper transfer belt of each example was 3.0 µm. Thus, the wet paper transfer belt was completed.

Manufacturing dimensions were 20.5 m in length and 900 mm in width.

### 2. Evaluation of Wet Paper Transfer Belt

### <Appearance Evaluation>

For the wet paper web carrying surfaces of the wet paper transfer belts of Examples 1 to 4 and Comparative Examples 1 and 2, their appearances were evaluated. In specific, for the wet paper web carrying surface of the wet paper transfer belt, the presence or absence of swellings and their conditions were observed by the aforementioned method. Moreover, the number of swellings whose height was equal to or higher than 50 µm on the wet paper web carrying surface per 1m² of the wet paper web carrying surface were counted.

Next, the presence or absence of cracks and their conditions on the wet paper web carrying surface of the wet paper transfer belt were observed based on the following criteria. In specific, the wet paper web carrying surface of the wet paper transfer belt was visually observed, and cracks were identified using a digital caliper. Then, the length of each crack was measured, and the number of cracks whose length is equal to or longer than 10 mm per 1m² of the wet paper web carrying surface were counted.

The results from above are shown in Table 3 with the compositions of main components of the resin compositions used in Examples 1 to 4 and Comparative Examples 1 and 2.

### <Resin Falling Test>

First, for testing resin fallings, a test piece S was cut out from each of the wet paper transfer belts according to Examples 1 to 4 and Comparative Example 2. The dimensions of the test piece S were 60 mm in width and 70 mm in length between the grippers. Moreover, for test pieces S according to Example 3 and Comparative Example 2 which have swellings or cracks on the surface, a repairing was performed by removing the surface swellings, roughening the surface with a sandpaper, and re-applying a resin composition that constitutes the test piece S, and drying it.

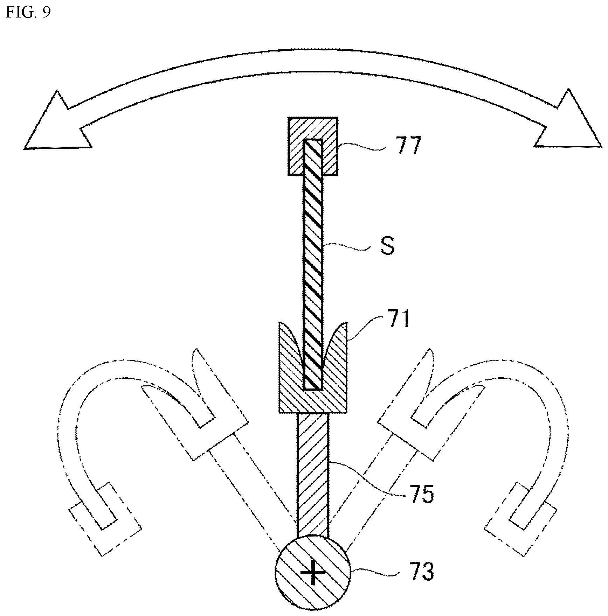

The resin falling test was carried out using a bending fatigue test apparatus shown in FIG. 9, at 20 °C under an atmosphere of 52 % relative humidity. In the bending fatigue test apparatus shown in FIG. 9, a lower gripper 71 is connected to a drive shaft 73 via a connecting rod 75 that has a rigidity, and makes a round trip to draw an arc as indicated by the arrow in the center of the drawing by means of the drive shaft 73 rotating to and fro. The distance from the rotation center of the drive shaft 73 to the end part of the lower gripper 71 on the test piece S side is 168 mm. By this lower gripper 71, one longitudinal end of the test piece S of the wet paper transfer belt was held, and the other longitudinal end of the test piece S was attached to an upper gripper 77. The weight of the upper gripper 77 was 400 g. As described above, the test pieces S of the wet paper transfer belts according to Examples 1 to 4 and Comparative Examples 1 and 2 were disposed in the bending fatigue test apparatus, and the test pieces S were reciprocated repeatedly 20,000 rounds under a condition in which the travel distance of the lower gripper 71 (an arc-shaped one-way travel distance) was 161, and the reciprocating speed was 162 reciprocations/min. Then, the evaluation was carried out according to the following criteria. The results obtained are shown in Table 3.
A: The resin falling test was carried out without performing repairing, and no resin falling was observed.
B: The resin falling test was carried out after performing repairing, and no resin falling was observed.
C: The resin falling test was carried out after performing repairing, and a resin falling was observed.
D: Even after repairing, the surface condition was not good enough to be used as a wet paper transfer belt.

### [Table 3]

**Table 3**

| | | | Example 1 | | Example 2 | | Example 3 | | Example 4 | | Comparative Example 1 | | Comparative Example 2 | |
|---|---|---|---|---|---|---|---|---|---|---|---|---|---|---|
| | | | Type | Mass % | Type | Mass % | Type | Mass % | Type | Mass % | Type | Mass % | Type | Mass % |
| Resin Composition Formulation (Major components) | Urethane resin | | PU1 | 23.81 | PU2 | 25.72 | PU3 | 27.00 | PU4 | 23.81 | PU5 | 17.44 | PU5 | 19.94 |
| | Organic solvent | | NEP | 14.29 | MDMPA | 9,35 | NMP | 11.57 | DMM | 7.94 | - | - | MEK | 13.23 |
| | Water | | Water | 43.08 | Water | 44.45 | Water | 40.00 | Water | 49.48 | Water | 50.87 | Water | 48.11 |
| | Crosslinking agent | | MF | 2.36 | MF | 0.36 | MF | 12.70 | MF | 1,25 | MF | - | MF | 2.36 |
| | Inorganic filler | | Kaolin cray | 15.12 | Kaolin cray | 15.48 | Kaolin cray | 15.48 | Kaolin cray | 15.08 | Kaolin cray | 15.12 | Kaolin cray | 15.13 |
| | Others | | Others | 1.33 | Others | 1.38 | Others | 1.38 | Others | 1.33 | Others | 1.53 | Others | 1.32 |
| Evaluation | Appearance evaluation | Swellings | None | | None | | None | | With a few swellings (height = 50-100 µm) | | None | | With a number of swellings (the maximum height = 1047 µm) | |
| | | Cracks | None | | None | | None | | None | | Many cracks over entire surface | | None | |
| | | The number of swellings and cracks (number/m²) | 0 | | 0 | | 0 | | 0.33 | | >20 | | 9.81 | |
| | Resin falling test | | A | | A | | A | | B | | D | | C | |

As shown in Table 1, in the wet paper transfer belts according to Examples 1 to 4, swellings and cracks on the wet paper web carrying surface were suppressed. Moreover, in the wet paper transfer belts according to Examples 1 to 4, no resin falling was observed in the resin falling test. In particular, in the wet paper transfer belts according to Examples 1 to 3 formed using an organic solvent whose boiling point was equal to or higher than 200 °C, no swellings and cracks were observed, and no resin falling was observed in the resin falling test even without repairing.

On the contrary, in the wet paper transfer belt according to Comparative Example 1, a number of cracks were generated on the wet paper web carrying surface. It is speculated that, upon removing the liquid such as water from the resin composition, the resin composition shrunk as it became a resin layer, resulting in cracks generated on the surface. Moreover, the wet paper transfer belt according to Comparative Example 1 had a number of cracks generated therein, and it was not good enough to be used even after repairing, regardless of performing the resin falling test.

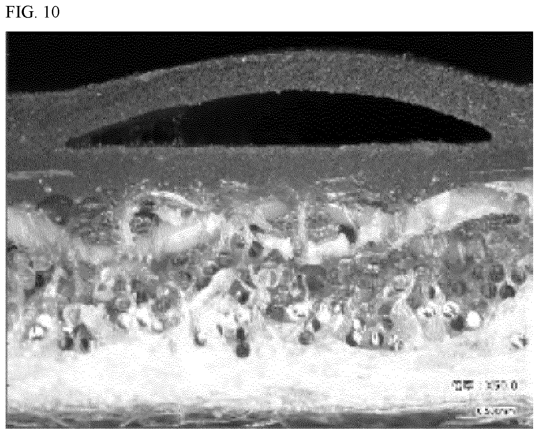

Moreover, in the wet paper transfer belt according to Comparative Example 2, a number of large swellings were generated on the wet paper web carrying surface. FIG. 10 shows a photograph of a swelling generated in the wet paper transfer belt according to Comparative Example 2. It is speculated that, upon removing the liquid such as water and organic solvents from the resin composition, the organic solvent with a low boiling point rapidly vaporized and expanded within the resin layer, resulting in the generation of swelling. Moreover, in the wet paper transfer belt according to Comparative Example 2, even after repairing, there was a number of resin fallings in the resin falling test.

FIG. 10 is a microscopic cross-sectional photograph of the wet paper transfer belt according to Comparative Example 2. As FIG. 10 indicates the part of the swelling, in the wet paper transfer belt according to Comparative Example 2, there is a cavity generated near the wet paper web carrying surface, resulting in a large swelling. It can easily be understood that, the presence of a swelling that has such a cavity will degrade the wet paper web carrying surface of the wet paper transfer belt starting from that part.

As above, it can be understood that, in the wet paper transfer belts according to Examples 1 to 4, the resin fallings are suppressed even at the time of being used, and changes in the desired functions of the wet paper transfer belt such as the wet paper web adherence and detachability are suppressed.

### [Reference signs list]

1 Wet Paper Transfer Belt
11 First resin layer
111 Wet paper web contact surface
13 Reinforcing fibrous substrate layer
131 Reinforcing fibrous substrate
15 Second resin layer
151 Roll contact surface
113, 133, 153 Resins

## Claims

1. A papermaking belt used in a papermaking machine comprising at least one resin layer comprising a resin, wherein
the total number of swellings whose height is equal to or higher than 50 µm and cracks whose length is equal to or longer than 10 mm on at least one surface of the resin layer is equal to or less than 1.0/m².

2. The papermaking belt according to Claim 1, wherein the resin layer comprises an aqueous urethane resin.

3. A papermaking belt used in a papermaking machine comprising at least one resin layer comprising a resin, wherein
the resin layer is formed using a resin composition comprising an aqueous dispersion of a urethane resin, and wherein
the resin composition comprises an organic solvent whose boiling point at 1 atm is equal to or higher than 100 °C.

4. The papermaking belt according to Claim 3, wherein the content of the organic solvent in the resin composition is equal to or more than 5.0 mass % and equal to or less than 30 mass %.

5. The papermaking belt according to Claim 3, wherein the organic solvent comprises an organic solvent whose boiling point at 1 atm is equal to or higher than 170 °C.

6. The papermaking belt according to Claim 3, wherein the vapor pressure of the organic solvent at 20°C is equal to or less than 200 Pa.

7. The papermaking belt according to Claim 3, wherein the organic solvent comprises one or more type(s) selected from a group consisting of 1-methyl-2-pyrrolidone, 1-ethyl-2-pyrrolidone, dipropylene glycol dimethyl ether, 3-methoxy-*N,N*-dimethylpropanamide, and 3-butoxy-*N*,*N*-dimethylpropanamide.

8. The papermaking belt according to Claim 3, wherein the organic solvent comprises an organic solvent whose boiling point at 1 atm is equal to or higher than 205 °C.

9. The papermaking belt according to Claim 8, wherein the organic solvent comprises one or more type(s) selected from a group consisting of 1-ethyl-2-pyrrolidone, 3-methoxy*-N,N-*dimethylpropanamide, and 3-butoxy-*N*,*N*-dimethylpropanamide.

10. The papermaking belt according to any one of Claims 1 to 3, wherein the papermaking belt is a wet paper transfer belt.

11. The papermaking belt according to any one of Claims 1 to 3, wherein the papermaking belt is a shoe press belt.

12. A method for producing a papermaking belt comprising a step of forming at least one resin layer using a resin composition comprising an aqueous dispersion of a urethane resin, wherein
the resin composition comprises an organic solvent whose boiling point at 1 atm is equal to or higher than 100 °C.
